# EUROPÄISCHE PATENTANMELDUNG

(11) **EP 1 705 059 A2**
(43) Veröffentlichungstag der Anmeldung: **27.09.2006**
(21) Anmeldenummer: 06004064.9
(22) Anmeldetag: 28.02.2006
(51) Int. Cl.: B60P 3/32, B62D 39/00, B60J 5/06

(54) **Verschlusselement für die Schiebetüröffnung eines Kraftfahrzeuges**

(30) Priorität: 02.03.2005 DE 102005010163
(71) Anmelder: AAV Aerodynamische Anbauteile, 22926 Ahrensburg (DE)
(72) Erfinder: Albrecht, Horst, 23881 Kobert (DE)
(74) Vertreter: Schaefer, Konrad

(57) **Zusammenfassung**

Ein Verschlusselement für die zur Aufnahme einer Schiebetür ausgebildete Öffnung (3) in der Seitenwand eines Kraftfahrzeuges (1) ist dadurch gekennzeichnet, dass das Verschlusselement als passend zur Öffnung (3) vorgeformte, dauerhaft in der Öffnung (3) befestigbare Platte (4) ausgebildet ist.

## Beschreibung

Die Erfindung betrifft ein Verschlusselement der im Oberbegriff des Anspruchs 1 genannten Art.

Bekannte gattungsgemäße Verschlusselemente sind in Form der Schiebetür selbst vorgesehen, die in geschlossener Stellung die Öffnung verschließt.

Kraftfahrzeuge, z.B. größere Kombinationskraftwagen und insbesondere Kleintransporter, werden häufig auf Basis des Serienfahrzeuges zu Wobnmobilen umgerüstet. Dazu werden Einbauten im Bereich des Laderaumes angebracht, wie z.B. Möbel, Küchenelemente und Schränke. Soweit möglich, werden die Einbauelemente fest an den Wänden des Laderaumes montiert.

In den letzten Jahren werden alle für solchen Umbau geeignete Kraftfahrzeuge zunehmend mit seitlichen Schiebetüren ausgerüstet, die für den ursprünglich vorgesehenen Einsatzzweck des Fahrzeuges gut geeignet sind, da Schiebetüren einen großflächigen Zugang zum Laderaum schaffen, ohne durch seitliches Ausschwenken größere Parkabstände zu benötigen.

Schiebetüren sind jedoch nachteilig beim Umbau zu einem Wohnmobil, da sie sehr großflächig sind und da ihre Innenfläche als Wandfläche zur Anbringung von Einbauclementen verloren geht.

Die Aufgabe der vorliegenden Erfindung besteht darin, ein gattungsgemäßes Verschlusselement zu schaffen, das die Umrüstmöglichkeiten zu einem Wohnmobil verbessert.

Diese Aufgabe wird mit den Merkmalen des Anspruches 1 gelöst.

Erfindungsgemäß ist als Verschlusselement eine passend zur Öffnung geformte, in dieser dauerhaft befestigte Platte vorgesehen, die passend zum Fahrzeugtyp in Serie kostengünstig vorgefertigt sein kann und speziell den Anforderungen eines Wohnmobiles anpassbar ist. Sie kann insbesondere vollständig geschlossen ausgebildet sein, also durchgehend an der Innenwand zur Montage von Einbauelementen zur Verfügung stehen. Dadurch ergeben sich im Bereich der Öffnung wesentlich verbesserte Umrüstmöglichkeiten.

Wenn andere Zugangsmöglichkeiten zum Innenraum des Wohnmobiles bestehen, wie beispielsweise durch eine Hecktür oder durch den Fahrerraum, so kann die Platte vollständig geschlossen ausgebildet sein. Vorzugsweise sind jedoch die Merkmale des Anspruches 2 vorgesehen. Hiernach weist die Platte eine Tür auf, die insbesondere wesentlich kleiner sein kann als die von der Platte verschlossene Öffnung. Diese Tür schafft einen Zugang zum Innenraum an der gewohnten Stelle, an der die Schiebetür saß, kann jedoch in ihrer Fläche auf den Zugang für eine Person begrenzt sein und stellt den Rest der ursprünglich zum Beladen größerer Güter dimensionierten Öffnung für Wandanbaumöglichkeiten zur Verfügung.

Vorzugsweise sind die Merkmale des Anspruches 3 vorgesehen. Auf diese Weise kann die Platte passend zur Randprofilierung der Öffnung ausgebildet sein und passgenau in diese zur Befestigung eingesetzt werden. Dadurch lässt sich die strukturelle Festigkeit des Kraftfahrzeugaufbaues und die Montage verbessern.

Die Befestigung der Platte kann mittels der üblichen Karosserietechniken, wie z.B. Verschweißen, Verschrauben und dergl. erfolgen. Vorzugsweise sind jedoch die Merkmale des Anspruches 4 vorgesehen. Eine Verklebung schafft mit heute üblicher Klebetechnologie eine hochfeste Verbindung, die einfach und schnell herstellbar ist.

In der Zeichnung ist die Erfindung beispielsweise und schematisch dargestellt. Es zeigen:
- Fig. 1: eine Seitenansicht auf einen mit einem erfindungsgemäßen Verschlusselement ausgerüsteten Kleintransporter und
- Fig. 2: einen Schnitt nach Linie 2 - 2 in Fig. 1.

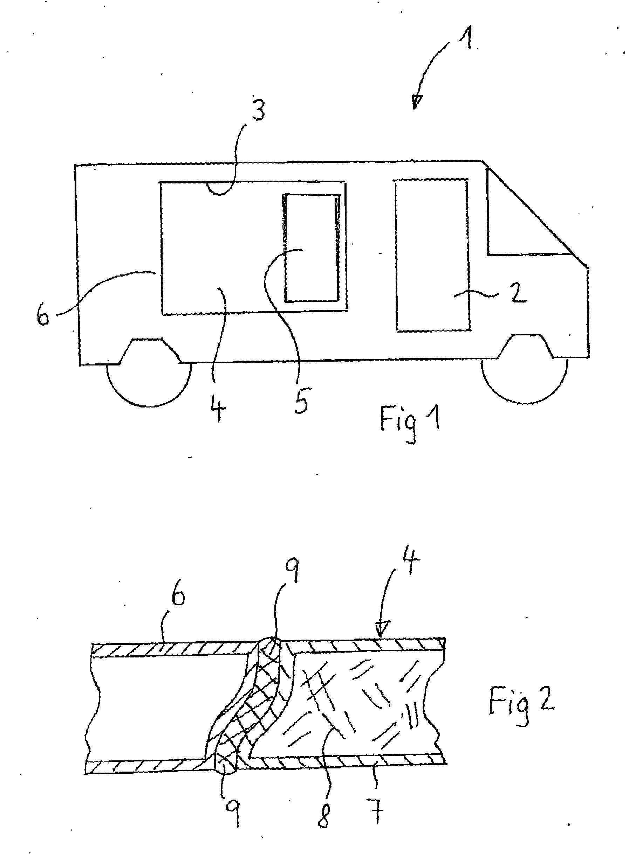

Fig.1 zeigt in Seitenansicht die in Fahrtrichtung rechte Seite eines Kleintransporters 1 mit einer Beifahrertür 2 und einer Öffnung 3, in der bei Auslieferung des Serienfahrzeuges eine Schiebetür saß.

Der dargestellte Kleintransporter ist zum Wohnmobil umgerüstet. Dazu gehört die Anbringung vieler Einbauelemente im Laderaum des Kleintransporters 1, die insbesondere an den Wänden montiert werden. Dies sind insbesondere Küchenelemcnte, Wandschränke und dergleichen.

Um die Einbaumöglichkeit für Wandelemente zu verbessern, ist in die Öffnung 3 eine Platte 4 eingesetzt. Diese kann in ihrem Umfang, ihrer Wölbung und sonstigen Oberilächengestaltung, z.B Sicken, und in ihrer Randprofilierung passend zur Öffnung 3 des Kleintransporters vorgefertigt sein, insbesondere in Kleinserie für einen speziellen Fahrzeugtyp. Die Platte 4 ist in der Öffnung 3 dauerhaft befestigt.

Im dargestellten Ausführungsbeispiel der Fig. 1 ist in der Platte 4 eine Tür 5 vorgesehen. Diese ist in ihrer Größe so gewählt, dass ein Mensch den Innenraum betreten kann. Sie ist jedoch in ihrer Fläche wesentlich kleiner als die Öffnung 3. Die restlichen Flächenbereiche der Öffnung 3 stehen nach Umrüstung mit der Platte 4 als feste Wandfläche zur Wandmontage von Einrichtungsgegenständen, wie z.B. Wandschränken, zur Verfügung.

Fig. 2 zeigt im Schnitt nach Linie 2 -2 in Fig. 1 den Randbereich der Öffnung 3. Eine angrenzende Karosseriewand 6 des Kleintransporters 1 ist in üblicher Weise als zweiwandige hohle Blechkonstruktion ausgebildet. Die Platte 4 ist im dargestellten Ausführungsbeispiel in gleicher Dicke wie die Karosseriewand 6 mit einer Hülle 7 ausgerüstet, die z.B. aus Glasfaserkunststoff besteht. Der Innenraum der Platte 4 ist mit einer Ausschäumung 8 versehen, die beispielsweise die Hülle 7 aussteift und auch zur Wärmedämmung dienen kann.

Wie Fig. 2 zeigt, ist der Spalt im Randbereich der Öffnung 3 zwischen der Platte 4 und der Katrosseriewand 6 mit einem geeigneten Kleber 9 versiegelt, der eine hoch feste, dauerhafte Verbindung sicherstellt.

Zur Umrüstung vom Serienzustand des Kleintransporters 1 in den in Fig. 1 dargestellten Karosseriezustand des Wohnmobiles wird zunächst die vorhandene Schiebetür demontiert. Es werden die zugehörigen Beschlagelemente, Dichtungselementc und dergl. demontiert. Sodann wird eine in ihrer Größe, Form und Randprofilierung passende Platte 4 eingesetzt und im Randspalt, wie Fig. 2 zeigt, verklebt.

Anstelle der dargestellten Verklebung können auch andere Befestigungsmethoden gewählt werden, z.B. Abdichtung des Randspaltes mit Gummidichtungen und Verschraubung.

Im dargestellten Ausführungsbeispiel der Fig. 1 ist die Platte 4 mit einer Tür 5 versehen. Diese kann fehlen, wenn andere geeignete Zugangsmöglichkeiten zum Innenraum gegeben sind. Zusätzlich zur Tür 5 kann in der Platte 4 noch ein Fenster vorgesehen sein.

## Patentansprüche

1. Verschlusselement für die zur Aufnahme einer Schiebetür ausgebildete Öffnung (3) in der Seitenwand eines Kraftfahrzeuges (1), **dadurch gekennzeichnet, dass** das Verschlusselement als passend zur Öffnung (3) vorgeformte, dauerhaft in der Öffnung (3) befestigbare Platte (4) ausgebildet ist.

2. Verschlusselement nach Anspruch 1, **dadurch gekennzeichnet, dass** in der Platte (4) eine Tür (5) ausgebildet ist.

3. Verschlusselement nach Anspruch 1, **dadurch gekennzeichnet, dass** die Platte (4) in ihren Randbereichen passend zu den Randbereichen der Öffnung (3) profiliert ist (Fig. 2).

4. Verschlusselement nach Anspruch 1, **dadurch gekennzeichnet, dass** die Befestigung als Verklebung (9) ausgebildet ist.
